# FASCICULE DE BREVET EUROPEEN

(11) **EP 4 026 681 B1**
(45) Date de publication et mention de la délivrance du brevet: **28.05.2025**
(21) Numéro de dépôt: 22156922.1
(22) Date de dépôt: 21.04.2016
(51) Int. Cl.: B29C 49/42, B29C 49/68, B65G 54/02, B29C 49/12, B29K 67/00, B29L 31/00, F27B 9/24

(54) **CONVOYEUR DE CORPS CREUX A TRAVERS UNE STATION DE CHAUFFAGE**
FÖRDERBANDS FÜR HOHLKÖRPER DURCH EINE HEIZSTATION
CONVEYOR OF HOLLOW BODIES THROUGH A HEATING STATION

(30) Priorité: 29.04.2015 FR 1553860
(43) Date de publication de la demande: 13.07.2022
(62) Demande divisionnaire de: 16738476.7
(73) Titulaire: Sidel Participations, 76930 Octeville-sur-Mer (FR)
(72) Inventeur: LAHOGUE, Yoann, 76930 Octeville-sur-Mer (FR); LECOMTE, Frédéric, 76930 Octeville-sur-Mer (FR); FEVRE, Sébastien, 76930 Octeville-sur-Mer (FR)
(74) Mandataire: Sidel Group

(56) Documents cités:
- EP-A1- 0 571 262
- EP-A1- 1 070 579
- EP-A1- 2 848 382
- DE-A1- 102008 042 543
- DE-A1- 2 510 591

## Description

### DOMAINE TECHNIQUE DE L'INVENTION

L'invention concerne un procédé de commande d'un convoyeur de corps creux à travers une station de chauffage pour une installation de fabrication de récipients en matériau thermoplastique, comportant :
- un tunnel de chauffage définissant un parcours de chauffe ;
- un convoyeur comportant au moins un rail de défilement formant un circuit, et des navettes susceptibles de circuler le long du rail en embarquant au moins un corps creux, chaque navette étant commandée en déplacement individuellement, le rail présentant un tronçon de chauffe pour le transport des corps creux le long du parcours de chauffe ;
- un dispositif d'entrée des corps creux à chauffer amenant les corps creux jusqu'à un tronçon de chargement du rail de défilement pour leur chargement sur les navettes, deux navettes successives circulant avec un premier écartement d'entrée déterminé sur ce tronçon de chargement ;
- un dispositif de sortie des corps creux chauds qui récupère les corps creux embarqués sur les navettes circulant sur un tronçon de déchargement du rail de défilement.

### ARRIERE PLAN TECHNIQUE DE L'INVENTION

La fabrication de récipients en matière thermoplastique, tels que des bouteilles, flacons, etc. est généralement effectuée à partir de préformes, parfois appelées ébauches, qui sont introduites dans un dispositif de moulage auquel sont associés des moyens de formage, par exemple de soufflage ou d'étirage-soufflage.

Dans la suite de la description et dans les revendications, les préformes et les récipients finis seront désignés sous le terme générique "corps creux". De manière traditionnelle dans ce domaine technique, la préforme et le récipient fini présentent un goulot ou col identique. De ce fait, un même organe de support d'une préforme par son col est aussi adapté pour supporter un récipient fini.

L'installation de fabrication de récipients est alimentée avec des préformes qui ne sont pas en état d'être directement formées du fait de leur température insuffisante. Préalablement à leur moulage par soufflage ou étirage-soufflage, les préformes sont donc chauffées dans une station de chauffage de manière à leur conférer une structure suffisamment malléable pour l'opération de soufflage.

De telles installations de fabrication en grande série de récipients sont équipées d'une station de chauffage comportant un tunnel de chauffage muni des moyens de chauffage des préformes. Ce tunnel de chauffage détermine un parcours de chauffe le long duquel les préformes sont généralement transportées par un convoyeur à vitesse stabilisée sans marquer d'arrêt. Le tunnel présente une longueur suffisante pour permettre le chauffage des préformes durant leur traversée.

Le convoyeur comporte des organes de support individuels des préformes qui défilent le long d'un circuit fermé dont une portion transporte les préformes le long du parcours de chauffe qui traverse le tunnel de chauffage. Les organes de support sont généralement formés par des mandrins qui sont susceptibles d'entraîner les préformes transportées en rotation autour de leur axe pour garantir une chauffe homogène des préformes.

Par ailleurs, les préformes sont amenées les unes après les autres par un dispositif d'entrée jusqu'à une zone d'entrée dans la station de chauffage. Le dispositif d'entrée est généralement formé par une roue tournante équipée à sa périphérie d'organes de support des préformes, tels que des encoches ou des pinces. Les préformes sont ainsi chargées sur le convoyeur au niveau de la zone d'entrée, dans laquelle la trajectoire des organes de support du convoyeur est tangente avec la trajectoire des organes de support de préformes du dispositif d'entrée.

Pour permettre un transfert des préformes depuis le dispositif d'entrée jusqu'au convoyeur, les organes de support du convoyeur doivent circuler de manière coordonnée, tant en position qu'en vitesse, avec les organes de support du dispositif d'entrée dans la zone d'entrée. Sur la roue d'entrée, les préformes sont espacées d'un pas déterminé selon leur sens de déplacement. De ce fait, il est impératif que les organes de support individuels du convoyeur soient espacés d'un écartement égal au pas d'entrée des préformes lors de leur passage sur la zone d'entrée.

La même problématique se rencontre pour le transfert des préformes chaudes, à la sortie du parcours de chauffe, jusqu'à un dispositif de sortie similaire au dispositif d'entrée.

Par ailleurs, la station de chauffage comporte un tunnel de chauffage particulièrement long et encombrant. Il serait donc intéressant de pouvoir réaliser un tunnel de chauffage plus court, et donc plus compact, sans pour autant détériorer la qualité de chauffage des préformes.

De plus, dans les stations de chauffage connues de l'état de la technique, les préformes défilant dans le tunnel de chauffage sont écartées les unes des autres d'un pas relativement important. De ce fait, une grande partie du rayonnement chauffant émis par les moyens de chauffage est produit en pure perte, car il passe dans les espaces laissés entre deux préformes successives sans chauffer ces dernières. Ainsi, une grande quantité d'énergie est gaspillée.

Selon une autre problématique, les préformes chaudes sont destinées à alimenter au moins une station suivante de traitement, notamment la station de formage. Il arrive fréquemment que le pas entre deux préformes successives dans la station de traitement suivante soit différent du pas entre deux préformes successives transportées par le dispositif d'entrée. De ce fait, un dispositif de transfert susceptible de changer le pas entre deux préformes est généralement interposé dans le flux des préformes en aval du four et en amont de ladite station de traitement suivante.

Un tel dispositif de transfert avec changement de pas est non seulement onéreux, mais il présente aussi l'inconvénient d'augmenter l'encombrement de l'installation de formage.

On connait également les documents US 5,972,255, EP0571262, DE102008042543 et EP2848382.

Le document US 5,972,255 décrit un procédé et un dispositif de moulage par soufflage directement après l'injection des préformes dans lequel la température des préformes n'a besoin d'être remontée que légèrement et la distance des préformes dans le four et la même qu'à l'extérieur dudit four. Alternativement, le dispositif peut être utilisé pour réchauffer des préformes froides. Les préformes doivent alors rester plus longtemps dans le four, raison pour laquelle le pas entre les supports est diminué dans le four. L'emplacement exact de la diminution du pas ou de l'augmentation du pas n'est cependant pas explicitement décrit dans ce document.

Le document EP0571262 décrit une unité de traitement thermique présentant une succession de fours pour augmenter le taux de cristallinité du PET.

Le document DE102008042543 décrit quant à lui un dispositif de changement de pas pour machine de moulage par soufflage.

Le document EP2848382 décrit une installation avec un four, une souffleuse et des éléments de transport pilotés individuellement Le document EP 1070579 A1 décrit un support de quatre préformes permettant de modifier la distance entre les préformes.

### BREF RESUME DE L'INVENTION

L'invention se rapporte à un convoyeur de corps creux à travers une station de chauffage pour une installation de fabrication de récipients en matériau thermoplastique, comportant : un tunnel de chauffage définissant un parcours de chauffe ; un convoyeur comportant au moins un rail de défilement formant un circuit et des navettes susceptibles de circuler le long du rail en embarquant au moins un corps creux, chaque navette étant commandée en déplacement individuellement, le rail présentant un tronçon de chauffe pour le transport des corps creux le long du parcours de chauffe ; un dispositif d'entrée des corps creux à chauffer amenant les corps creux jusqu'à un tronçon de chargement du rail de défilement pour leur chargement sur les navettes, deux navettes successives circulant avec un premier écartement E1 d'entrée déterminé sur ce tronçon de chargement ; un dispositif de sortie des corps creux chauds qui récupère les corps creux embarqués sur les navettes circulant sur un tronçon de déchargement du rail de défilement ; ledit convoyeur étant remarquable en ce que chaque navette comporte un premier organe de support d'un premier corps creux et un deuxième organe de support d'un deuxième corps creux, chaque navette étant ainsi susceptible de porter simultanément deux corps creux, les organes de support d'une navette étant montés mobiles sur ladite navette entre une position étendue dans laquelle les organes de support sont écartés dudit premier écartement E1 d'entrée selon le sens de déplacement de la navette, et une position rapprochée dans laquelle les organes de support sont rapprochés l'un de l'autre selon le sens de déplacement de cette navette, de telle manière que deux navettes successives circulant sur le tronçon de déchargement soient espacées d'un écartement E3 de sortie déterminé qui est différent du premier écartement E1 d'entrée.

Selon d'autres caractéristiques du convoyeur :
- la navette comporte un bras définissant un axe d'orientation, chaque extrémité dudit bras comportant l'un des organes de support, ledit bras étant monté mobile en rotation par rapport à la navette autour d'un axe principal entre une position droite correspondant au sens de déplacement de la navette, et une position oblique inclinée par rapport à la position droite ;
- le convoyeur comporte un actionneur qui est apte à commander le bras entre sa position droite et sa position oblique ;
- l'actionneur est susceptible d'être actionné par un organe d'actionnement porté par l'une des navettes adjacentes.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente schématiquement une installation de fabrication de récipients équipé d'une station de chauffage comportant un convoyeur réalisé selon un premier mode de réalisation de l'invention ;
- la figure 2 est une vue de côté qui représente une partie du tronçon de chargement du convoyeur sur laquelle circulent deux navettes espacées longitudinalement d'un premier écartement ;
- la figure 3 est une vue de côté qui représente une partie du tronçon de chauffe du convoyeur sur laquelle circulent quatre navettes espacées longitudinalement d'un deuxième écartement ;
- la figure 4 est une vue de côté qui représente une partie d'un tronçon de déchargement du convoyeur sur laquelle circulent deux navettes espacées longitudinalement d'un troisième écartement ;
- la figure 5 est une vue de dessus qui représente le tronçon de déchargement du convoyeur selon une variante du premier mode de réalisation de l'invention ;
- la figure 6 est une vue de dessus similaire à celle de la figure 1 qui représente un deuxième mode de réalisation du convoyeur.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif une direction longitudinale, dirigée d'arrière en avant selon le sens de déplacement des préformes, une direction verticale, dirigée de bas en haut orthogonalement au plan de déplacement des préformes, et une direction transversale qui est perpendiculaire aux deux directions précédentes.

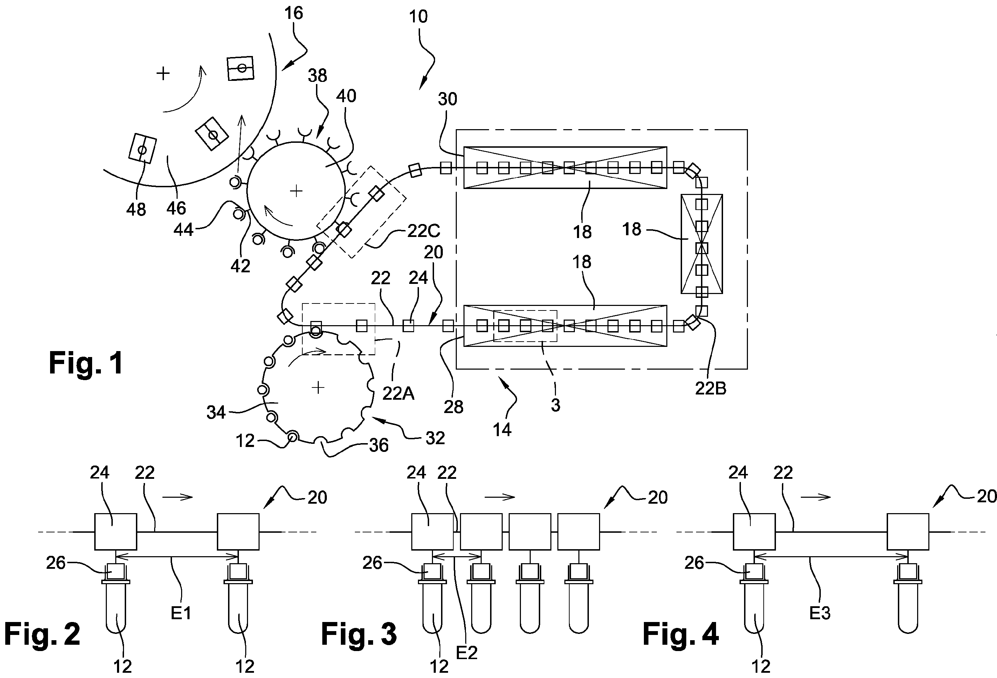

On a représenté à la figure 1 une partie d'une installation 10 de fabrication en grandes séries de récipients en matériau thermoplastique tel que du polyéthylène téréphtalate ou PET. L'installation 10 de fabrication est ici destinée à former des récipients à partir de préformes 12 à chauffer.

L'installation 10 de fabrication comporte une station 14 de chauffage des préformes 12 et une station 16 de formage, ici par soufflage ou étirage-soufflage, des préformes 12 préalablement chauffées par ladite station 14 de chauffage.

La station 14 de chauffage comporte un tunnel 18 de chauffage, qui est ici réalisé en trois tronçons successifs. Le tunnel 18 de chauffage a été représenté de manière schématique. Le tunnel 18 de chauffage définit un parcours de chauffe qui est destiné à être parcouru par chaque préforme 12.

Classiquement, un tel tunnel 18 de chauffage (respectivement chaque tronçon du tunnel) est délimité par deux parois latérales (non représentées) qui forment un tunnel. Au moins l'une des parois est munie de moyens de chauffage, tels que des lampes à infrarouge (non représentés), émettant des radiations chauffant les préformes,. Le tunnel 18 de chauffage peut aussi être équipé de moyens de ventilation permettant de favoriser une chauffe homogène des préformes et permettant d'éviter une surchauffe de certains composants de la station 14 de chauffage.

La station 14 de chauffage comporte aussi un convoyeur 20 qui est destiné à transporter chaque préforme 12 à travers le tunnel 18 de chauffage. En fonctionnement normal de l'installation 10 de fabrication, le convoyeur 20 est ici destiné à transporter les préformes 12 de manière continue, c'est-à-dire sans interruption du déplacement des préformes 12. La longueur du tunnel 18 de chauffage et la puissance des moyens de chauffage sont adaptées pour que les préformes 12 ressortent chauffées à une température suffisante pour leur formage par la station 16 de formage.

Le convoyeur 20 comporte au moins un rail 22 de défilement qui forme un circuit fermé et sur lequel circulent des navettes 24 . Chaque navette 24 est commandée individuellement en déplacement, c'est à dire indépendamment des autres navettes 24.

En variante non représentée de l'invention, le rail transverse la station de chauffage selon un circuit ouvert, le rail desservant aussi des stations de traitement amont ou aval. Un tel agencement est qualifié de "séquentiel".

Les navettes 24 et le rail 22 de défilement font partie d'un moteur linéaire. Dans un tel moteur, le rail 22 de défilement comporte un stator qui est formé d'une série de bobinages (non représentés) qui sont répartis le long du rail 22. Chaque bobinage est commandé individuellement pour induire localement un champ magnétique de manière indépendante des autres bobinages.

Les bobinages sont par exemple commandés par une unité électronique de commande (non représentée) qui est programmée de manière appropriée.

Chaque navette 24 est équipée d'au moins un aimant permanent qui réagit au champ magnétique induit par chaque bobinage du rail 22 en provoquant le déplacement de la navette 24 le long du rail 22. De plus, chaque navette 24 est guidée en déplacement le long du rail 22 de défilement.

Le pas entre deux bobinages est suffisamment faible pour permettre de commander les bobinages du rail 22 de défilement de manière à provoquer le déplacement de chaque navette 24 de manière indépendante des autres navettes 24.

Un tel moteur linéaire est par exemple vendu par la société Beckhoff sous l'appellation "XTS". Pour de plus amples détails concernant cette technologie, on pourra se reporter aux documents US-A1-2013/0.119.897, US-A1-2013/0.035.784, WO-A1-2013/143.783 ou encore WO-A1-2013/143.950.

De manière générale, cette technologie mise en œuvre dans le cadre de l'invention permet de déplacer toutes les navettes 24 en file dans le même sens de déplacement le long du circuit, ici un sens antihoraire. La vitesse de déplacement de chaque navette 24 est susceptible d'être commandée individuellement par une unité électronique de commande (non représentée).

Chaque navette 24 comporte au moins un organe de support individuel d'une préforme 12.

Dans le mode de réalisation de l'invention représenté aux figures 1 à 4, chaque navette 24 comporte un unique organe de support individuel d'une préforme 12. Dans l'exemple représenté aux figures 2 \à 4, il s'agit d'un mandrin 26 qui est inséré verticalement dans un col de la préforme 12. Ainsi, chaque navette 24 est apte à transporter une préforme 12.

Le mandrin 26 est par exemple monté coulissant verticalement sur la navette 24 entre une position basse de préhension de préforme et une position haute d'éjection de la préforme. Le coulissement est par exemple commandé par un moteur électrique ou par un système de came.

Le rail 22 de défilement peut être divisé en plusieurs tronçons.

Au moins un tronçon dit "tronçon 22B de chauffe" du rail 22 de défilement permet aux navettes 24 de transporter les préformes 12 le long du parcours de chauffe. Le tronçon 22B de chauffe s'étend depuis une entrée 28 du tunnel 18 de chauffage jusqu'à une sortie 30 du tunnel 18 de chauffage.

Un tronçon dit "tronçon 22A de chargement" du rail 22 de défilement est agencé en amont de l'entrée 28 du tunnel 18 de chauffage, selon le sens de circulation des navettes 24. Les préformes 12 à chauffer sont chargées sur les navettes 24 circulant sur ce tronçon 22A. Ainsi, les navettes 24 arrivent sur ce tronçon 22A de chargement "à vide" et elles en ressortent chargées d'une préforme 12 à chauffer.

Un tronçon dit "tronçon 22C de déchargement" du rail 22 de défilement est interposé entre la sortie 30 du tunnel 18 de chauffage et le tronçon 22A de chargement, selon le sens de circulation des navettes 24. Les préformes 12 chaudes sont déchargées depuis des navettes 24 circulant sur ce tronçon 22C de déchargement. Ainsi, les navettes 24 arrivent sur ce tronçon 22C de déchargement chargées chacune d'une préforme 12 chaude après son passage à travers le tunnel 18 de chauffe et elles en ressortent "à vide".

L'installation 10 de fabrication comporte aussi un dispositif 32 d'entrée des préformes 12 à chauffer amenant les préformes 12 à chauffer jusqu'au tronçon 22A de chargement du rail 22 de défilement pour leur chargement sur les navettes 24. Le dispositif 32 d'entrée est apte à amener, jusqu'au tronçon 22A de chargement, chaque préforme 12 successivement, deux préformes 12 successives étant écartées d'un pas déterminé d'entrée selon leur sens de déplacement.

Dans l'exemple représenté à la figure 1, le dispositif 32 d'entrée est formé par une roue 34 à encoches 36. La roue 34 est montée rotative autour d'un axe vertical. La roue 34 présente à sa périphérie des encoches 36 dont chacune est susceptible de porter une préforme 12 en association avec des moyens connus et non représentés, tels que des guides périphériques de guidage. Deux encoches 36 voisines sont écartées circonférentiellement dudit pas déterminé d'entrée.

Dans le mode de réalisation représenté à la figure 1, l'installation 10 comporte aussi un dispositif 38 de sortie des préformes 12 chaudes qui est apte à transférer les préformes 12 depuis le tronçon 22C de déchargement du rail 22 de défilement jusqu'à la station 16 de formage. Le dispositif 38 de sortie est conçu pour embarquer les préformes 12 les unes après les autres, deux préformes 12 successives étant écartées d'un pas déterminé de sortie selon leur sens de déplacement.

Dans l'exemple représenté à la figure 1, le dispositif 38 de sortie est formé par une roue 40 équipée à sa périphérie d'une pluralité de bras 42. Chaque bras 42 comporte à son extrémité libre un organe de support tel qu'une pince 44 apte à saisir une préforme 12 par son col.

La station 16 de formage est ici formée par un carrousel 46 (dont seule une partie est représentée) qui porte une pluralité d'unités 48 de moulage à sa périphérie. Le carrousel 46 est monté rotatif de manière à déplacer les préformes 12 puis les récipients pendant leur formage. Une telle station de formage est bien connue et ne sera donc pas décrite plus en détails par la suite.

Généralement, l'écart circonférentiel entre deux unités 48 de moulage voisines est supérieur au pas déterminé de sortie des préformes 12 chaudes. A cet égard, les bras 44 sont généralement montés pivotant et/ou coulissant sur la roue 40 pour permettre de changer le pas entre deux préformes 12 successives durant leur transport jusqu'à la station 16 de formage. Ainsi, les préformes 12 sont écartées d'un pas adapté à l'écartement entre deux unités 48 de moulage lors de leur transfert sur la station 16 de formage.

On décrit à présent un procédé de commande du convoyeur 20 permettant de profiter pleinement de l'énergie utilisée par les moyens de chauffage du tunnel 18 de chauffage.

Dans ce mode de réalisation, l'écartement entre deux navettes 24 successives est égal à l'écartement longitudinal entre les deux organes de support de ces deux navettes 24, lesquels organes sont ici constitués par les mandrins 26.

Comme représenté à la figure 2, lorsqu'elles circulent sur le tronçon 22A de chargement du rail 22 de défilement, deux navettes 24 successives circulent avec un premier écartement "E1" d'entrée déterminé. Ce premier écartement "E1" correspond au pas déterminé d'entrée des préformes 12 à chauffer. Ainsi, chaque navette 24 passe en coïncidence avec une encoche 36 du dispositif 32 d'entrée permettant d'insérer le mandrin 26 dans le col de la préforme 12 pendant que celle-ci est encore supportée par l'encoche 36.

Puis, au moins à partir de leur entrée sur le tronçon 22B de chauffe, les navettes 24 sont commandées pour que l'écartement entre deux navettes successives soit réduit par rapport audit premier écartement "E1" d'entrée. L'écartement entre deux navettes 24 successives demeure réduit par rapport audit premier écartement "E1" d'entrée tant qu'elles circulent sur le tronçon 22B de chauffe, c'est-à-dire au moins jusqu'à leur sortie du tunnel 18 de chauffage. Ceci a pour effet de diminuer le pas entre deux préformes 12 pendant leur chauffage.

Ainsi, une plus grande proportion du rayonnement émis par les moyens de chauffage est absorbé utilement par les préformes 12 pour leur chauffage.

En outre, ceci permet de faire circuler simultanément une plus grande quantité de préformes dans le tunnel 18 de chauffage.

Dans le mode de réalisation représenté à la figure 3, l'écartement entre deux navettes 24 successives demeure égal à un deuxième écartement "E2" constant, dit écartement de chauffe, qui ne change pas tant qu'elles circulent sur le tronçon 22B de chauffe du rail 22 de défilement.

Puis, lorsque les navettes 24 arrivent sur le tronçon 22C de déchargement, elles sont commandées de manière que deux navettes 24 successives circulent avec un troisième écartement "E3" de sortie déterminé, comme illustré par la figure 4. Ce troisième écartement "E3" est déterminé de manière à minimiser le changement de pas entre deux préformes 12 successives durant leur transport par le dispositif 38 de sortie.

Chaque navette 24 est plus particulièrement commandée de manière à circuler en coïncidence avec un organe 44 de support correspondant du dispositif 38 de sortie pour permettre le transfert des préformes 12 du convoyeur 20 au dispositif 38 de sortie.

En variante non représentée de l'invention, l'écartement entre deux navettes successives circulant sur le tronçon de chauffe est susceptible de varier, tout en restant inférieur à l'écartement d'entrée. Une telle variation de l'écartement permet notamment de maîtriser plus précisément le profil de chauffe des préformes, particulièrement lorsque certaines portions du corps des préformes doivent être chauffées de manière préférentielle. En d'autres termes, l'écartement E2 peut varier.

Selon le mode de réalisation représenté aux figures 2 et 4, le troisième écartement "E3" de sortie est différent du premier écartement "E1" d'entrée. Ici le troisième écartement "E3" de sortie est supérieur au premier écartement "E1" d'entrée. Par conséquent, le troisième écartement "E3" de sortie est aussi supérieur au deuxième écartement "E2" de chauffe.

De manière générale, le deuxième écartement "E2" de chauffe est avantageusement inférieur au premier écartement "E1" d'entrée et au troisième écartement "E3" de sortie.

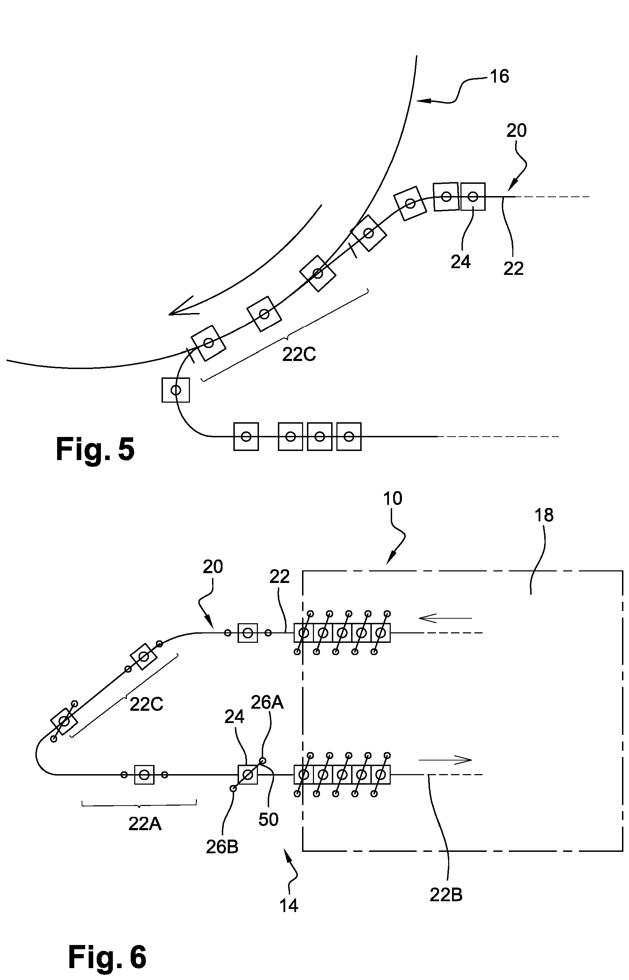

On a représenté à la figure 5 une variante de ce premier mode de réalisation, dans laquelle le troisième écartement "E3" entre les navettes 24 circulant sur le tronçon 22C de déchargement coïncide avec le pas entre deux unités 48 de moulage de la station 16 de formage. Dans ce cas il n'est plus nécessaire d'agencer un dispositif 38 de sortie apte à modifier le pas entre les préformes 12 puisque les préformes sont déjà écartées du pas adapté à la station 16 de formage.

Comme représenté à la figure 5, les préformes 12 sont ici directement transférées depuis le convoyeur 20 jusqu'à la station 16 de formage sans interposition de moyens de transport intermédiaire entre la station 14 de chauffage et la station 16 de formage. Ainsi, les préformes 12 chaudes sont directement déposées dans les unités de moulage par les navettes 24.

Cet agencement permet de réaliser une installation 10 de fabrication très compacte. Il permet en outre de diminuer le temps de transfert entre la chauffe des préformes et leur formage.

On a représenté à la figure 6 un deuxième mode de réalisation de l'installation 10 de fabrication. Cette installation 10 est similaire à celle décrite dans le premier mode de réalisation représenté à la figure 1. Seules les différences avec ce premier mode de réalisation seront donc décrites par la suite.

Dans ce deuxième mode de réalisation, chaque navette 24 comporte un premier organe 26A de support d'une première préforme 12 et un deuxième organe 26B de support d'une deuxième préforme 12. La navette 24 est ainsi susceptible de porter simultanément deux préformes 12. Chaque organe 26A, 26B de support est par exemple formé par un mandrin.

Les organes 26A, 26B de support sont montés mobiles sur la navette 24 entre une position étendue dans laquelle les organes 26A, 26B de support sont écartés du premier pas d'entrée des préformes selon le sens de déplacement de la navette 24, et une position rapprochée dans laquelle les organes 26A, 26B de support sont rapprochés l'un de l'autre selon le sens de déplacement de la navette 24.

A cet effet, la navette 24 comporte un bras 50 définissant un axe d'orientation. Chaque extrémité dudit bras 50 comporte l'un des organes 26A, 26B de support.

Le bras 50 est lui-même monté pivotant sur la navette 24 autour d'un axe principal vertical entre une position droite correspondant au sens de déplacement de la navette 24, et une position oblique inclinée par rapport à la position droite. Le pivotement du bras 50 entre ses deux positions est par exemple commandé par un actionneur (non représenté) embarqué sur la navette 24.

Lors du fonctionnement du convoyeur 20, les navettes 24 circulant sur le tronçon 22A de chargement du rail 22 de défilement sont commandées pour être espacées d'un premier écartement "E1" qui est égal à deux fois le pas déterminé d'entrée des préformes 12. De plus, le bras 50 est commandé dans sa position droite. Ainsi, tous les organes 26A, 26B de support, dans leur position étendue, sont espacés du même pas que le pas d'entrée des préformes 12.

Lorsque les navettes 24 circulent sur le tronçon 22B de chauffe du rail 22 de défilement, les bras 50 sont commandés vers leur position oblique. Ceci permet aux navettes 24 d'être commandées de manière à être espacées d'un deuxième écartement "E2" qui est bien inférieur au premier écartement "E1". Les navettes 24 sont plus particulièrement commandées de manière que les préformes 12 soient réparties sur deux rangées, comme cela est représenté à la figure 6. Les préformes 12 de la première rangée sont portées par les organes 26A de transport agencés à l'avant des navettes 24 tandis que les préformes 12 de la deuxième rangée sont portées par les organes 26B de transport agencés à l'arrière des navettes 24.

En outre, en position oblique, le bras 50 forme un angle avec la direction de déplacement des navettes 24, par exemple un angle de 45°, de manière que les préformes 12 de la première rangée soient décalées longitudinalement entre deux préformes 12 de la deuxième rangée.

Dans cette position et avec cet écartement "E2" entre les navettes 24, les organes 26A, 26B de support occupent leur position rapprochée. Cet agencement particulièrement compact permet de faire circuler simultanément une grande quantité de préformes 12 dans le tunnel 18 de chauffage tout en permettant à toutes les préformes 12, quelle que soit leur rangée, d'être exposées à la même quantité de radiation chauffante que les autres préformes 12.

Dans ce deuxième mode de réalisation, le pas d'entrée des préformes est égal au pas de sortie des préformes. Ainsi, lorsqu'elles circulent sur le tronçon 22C de déchargement, les navettes 24 sont commandées pour être espacées dudit premier écartement "E1" qui est égal à deux fois le pas déterminé d'entrée des préformes 12. De plus, le bras 50 est commandé dans sa position droite. Ainsi, tous les organes 26A, 26B de support, dans leur position étendue, sont espacés du même pas que le pas de sortie des préformes 12.

L'actionneur est par exemple un actionneur autonome, tel qu'un moteur, qui est embarqué sur la navette associée.

En variante non représentée de l'invention, l'actionneur nécessite une intervention externe pour être actionné. Il s'agit par exemple d'un dispositif de commande à came. Un suiveur de came est par exemple embarqué sur la navette, tandis qu'un chemin de came agencé parallèlement au rail de circulation permet d'agir sur le suiveur de came pour actionner le bras.

En variante non représentée de l'invention, l'actionneur est susceptible d'être actionné par un organe d'actionnement porté par l'une des navettes adjacentes. Ainsi, lorsque l'écartement entre deux navettes 24 est diminué, un poussoir d'une navette 24 est susceptible d'entrer en contact avec un mécanisme de pivotement d'une navette 24 adjacente pour commander le pivotement du bras 50. Il s'agit par exemple d'un dispositif à came ou d'un dispositif à engrènement.

Le procédé de commande réalisé selon les enseignements de l'invention permet ainsi de faire circuler un plus grand nombre de préformes dans le tunnel de chauffage, indépendamment du pas d'entrée et du pas de sortie des préformes.

Bien entendu, le procédé n'est pas limité au mode de réalisation qui est représenté aux figures. On pourra par exemple interposer une station de traitement des préformes et/ou des récipients finaux entre la sortie du four et le tronçon de déchargement. Une telle disposition est particulièrement avantageuse dans un agencement dit "séquentiel" des stations de traitement, comme cela a été expliqué précédemment. En ce cas, le convoyeur permet de véhiculer un corps creux depuis son état initial sous forme de préforme, puis, après le formage de ladite préforme, dans son état final de récipient fini.

En outre, le procédé de commande permet aussi de moduler l'écartement entre deux navettes de manière à espacer les préformes d'un premier pas d'entrée sur le tronçon 22A de chargement, d'un deuxième pas de chauffe sur le tronçon 22B de chauffe et d'un troisième pas de sortie sur le tronçon 22C de déchargement. Ces trois pas peuvent être différents les uns des autres.

## Revendications

1. Convoyeur (20) de corps creux (12) à travers une station (14) de chauffage pour une installation (10) de fabrication de récipients en matériau thermoplastique, comportant :
- un tunnel (18) de chauffage définissant un parcours de chauffe ;
- un convoyeur (20) comportant au moins un rail (22) de défilement formant un circuit et des navettes (24) susceptibles de circuler le long du rail (22) en embarquant au moins un corps creux (12), chaque navette (24) étant commandée en déplacement individuellement, le rail (22) présentant un tronçon (22B) de chauffe pour le transport des corps creux (12) le long du parcours de chauffe ;
- un dispositif (32) d'entrée des corps creux (12) à chauffer amenant les corps creux (12) jusqu'à un tronçon (22A) de chargement du rail (22) de défilement pour leur chargement sur les navettes (24), deux navettes (24) successives circulant avec un premier écartement (E1) d'entrée déterminé sur ce tronçon (22A) de chargement ;
- un dispositif (38) de sortie des corps creux (12) chauds qui récupère les corps creux (12) embarqués sur les navettes (24) circulant sur un tronçon (22C) de déchargement du rail (22) de défilement,
**caractérisé en ce que** chaque navette (24) comporte un premier organe (26A) de support d'un premier corps creux (12) et un deuxième organe (26B) de support d'un deuxième corps creux (12), chaque navette (24) étant ainsi susceptible de porter simultanément deux corps creux (12), les organes (26A, 26B) de support d'une navette (24) étant montés mobiles sur ladite navette (24) entre une position étendue dans laquelle les organes (26A, 26B) de support sont écartés dudit premier écartement (E1) d'entrée selon le sens de déplacement de la navette (24), et une position rapprochée dans laquelle les organes (26A, 26B) de support sont rapprochés l'un de l'autre selon le sens de déplacement de cette navette (24), de telle manière que deux navettes (24) successives circulant sur le tronçon (22C) de déchargement soient espacées d'un écartement (E3) de sortie déterminé qui est différent du premier écartement (E1) d'entrée.

2. Convoyeur (20) selon la revendication 1, **caractérisé en ce que** chaque navette (24) comporte un bras (50) définissant un axe d'orientation, chaque extrémité dudit bras (50) comportant l'un des organes (26A, 26B) de support de sa navette respective, ledit bras (50) étant monté mobile en rotation par rapport à la navette (24) autour d'un axe principal entre une position droite correspondant au sens de déplacement de la navette (24), et une position oblique inclinée par rapport à la position droite.

3. Convoyeur (20) selon l'une quelconque des revendications 1 ou 2, **caractérisé en ce que** les corps creux (12) d'une première rangée sont portés par les organes (26A) de transport agencés à l'avant des navettes (24) tandis que les corps creux (12) d'une deuxième rangée sont portés par les organes (26B) de transport agencés à l'arrière des navettes (24).

4. Convoyeur (20) selon l'une quelconque des revendications 2 ou 3, **caractérisé en ce que**, en position oblique, le bras (50) forme un angle de 45° avec la direction de déplacement des navettes (24) de manière que les corps creux (12) de la première rangée soient décalés longitudinalement entre deux corps creux (12) de la deuxième rangée.

5. Convoyeur (20) selon l'une quelconque des revendications 3 ou 4, **caractérisé en ce qu'**il comporte un actionneur qui est apte à commander le bras (50) entre sa position droite et sa position oblique.

6. Convoyeur (20) selon la revendication 5, **caractérisé en ce que** l'actionneur est susceptible d'être actionné par un organe d'actionnement porté par l'une des navettes (24) adjacentes.

7. Convoyeur (20) selon la revendication 6, **caractérisé en ce que** ledit organe d'actionnement consiste en un poussoir apte à entrer en contact avec un mécanisme de pivotement d'une navette (24) adjacente pour commander le pivotement du bras (50).

8. Convoyeur (20) selon la revendication 7, **caractérisé en ce que** ledit mécanisme de pivotement est un dispositif à came.

9. Convoyeur (20) selon la revendication 7, **caractérisé en ce que** ledit mécanisme de pivotement est un dispositif à engrènement.

## Patentansprüche

1. Förderer (20) für Hohlkörper (12) durch eine Aufheizstation (14) für eine Anlage (10) zur Fertigung von Behältern aus thermoplastischem Material, umfassend:
- einen Aufheiztunnel (18), der eine Heizstrecke definiert;
- einen Förderer (20), der mindestens eine Laufschiene (22), die einen Kreislauf bildet, und Schlitten (24), die entlang der Schiene (22) umlaufen und dabei mindestens einen Hohlkörper (12) aufnehmen können, umfasst, wobei die Bewegung jedes Schlittens (24) individuell gesteuert wird, wobei die Schiene (22) einen Heizabschnitt (22B) für den Transport der Hohlkörper (12) entlang der Heizstrecke aufweist;
- eine Eintrittsvorrichtung (32) für die aufzuheizenden Hohlkörper (12), die die Hohlkörper (12) bis zu einem Beladeabschnitt (22A) der Laufschiene (22) führt, damit sie in die Schlitten (24) geladen werden, wobei zwei aufeinanderfolgende Schlitten (24) auf diesem Beladeabschnitt (22A) mit einem bestimmten ersten Eintrittsabstand (E1) umlaufen;
- eine Austrittsvorrichtung (38) für die heißen Hohlkörper (12), welche die Hohlkörper (12), die in den auf einem Entladeabschnitt (22C) der Laufschiene (22) umlaufenden Schlitten (24) aufgenommen sind, zurücknimmt,
**dadurch gekennzeichnet, dass** jeder Schlitten (24) ein erstes Stützelement (26A) für einen ersten Hohlkörper (12) und ein zweites Stützelement (26B) für einen zweiten Hohlkörper (12) umfasst, wobei jeder Schlitten (24) somit zwei Hohlkörper (12) gleichzeitig tragen kann, wobei die Stützelemente (26A, 26B) eines Schlittens (24) auf dem Schlitten (24) beweglich zwischen einer gestreckten Position, in der die Stützelemente (26A, 26B) in der Bewegungsrichtung des Schlittens (24) um den ersten Eintrittsabstand (E1) beabstandet sind, und einer angenäherten Position, in der die Stützelemente (26A, 26B) in der Bewegungsrichtung dieses Schlittens (24) aneinander angenähert sind, angebracht sind, derart, dass zwei aufeinanderfolgende Schlitten (24), die auf dem Entladeabschnitt (22C) umlaufen, um einen bestimmten Austrittsabstand (E3) beabstandet sind, der von dem ersten Eintrittsabstand (E1) verschieden ist.

2. Förderer (20) nach Anspruch 1, **dadurch gekennzeichnet, dass** jeder Schlitten (24) einen Arm (50) umfasst, der eine Ausrichtungsachse definiert, wobei jedes Ende des Armes (50) eines der Stützelemente (26A, 26B) seines jeweiligen Schlittens umfasst, wobei der Arm (50) bezüglich des Schlittens (24) drehbeweglich um eine Hauptachse zwischen einer geraden Position, die der Bewegungsrichtung des Schlittens (24) entspricht, und einer schrägen Position, die bezüglich der geraden Position geneigt ist, angebracht ist.

3. Förderer (20) nach einem der Ansprüche 1 oder 2, **dadurch gekennzeichnet, dass** die Hohlkörper (12) einer ersten Reihe von den Transportelementen (26A) getragen werden, die vor den Schlitten (24) angeordnet sind, während die Hohlkörper (12) einer zweiten Reihe von den Transportelementen (26B) getragen werden, die hinter den Schlitten (24) angeordnet sind.

4. Förderer (20) nach einem der Ansprüche 2 oder 3, **dadurch gekennzeichnet, dass** in der schrägen Position der Arm (50) einen Winkel von 45° mit der Bewegungsrichtung der Schlitten (24) bildet, so dass die Hohlkörper (12) der ersten Reihe zwischen zwei Hohlkörpern (12) der zweiten Reihe in Längsrichtung versetzt sind.

5. Förderer (20) nach einem der Ansprüche 3 oder 4, **dadurch gekennzeichnet, dass** er einen Stellantrieb umfasst, der geeignet ist, den Arm (50) zwischen seiner geraden Position und seiner schrägen Position zu steuern.

6. Förderer (20) nach Anspruch 5, **dadurch gekennzeichnet, dass** der Stellantrieb von einem Betätigungselement betätigbar ist, das von einem der benachbarten Schlitten (24) getragen wird.

7. Förderer (20) nach Anspruch 6, **dadurch gekennzeichnet, dass** das Betätigungselement aus einem Stößel besteht, der geeignet ist, mit einem Schwenkmechanismus eines benachbarten Schlittens (24) in Kontakt zu kommen, um die Schwenkung des Armes (50) zu steuern.

8. Förderer (20) nach Anspruch 7, **dadurch gekennzeichnet, dass** der Schwenkmechanismus eine Nockenvorrichtung ist.

9. Förderer (20) nach Anspruch 7, **dadurch gekennzeichnet, dass** der Schwenkmechanismus eine Verzahnungsvorrichtung ist.

## Claims

1. Conveyor (20) for conveying hollow bodies (12) through a heating station (14) for an installation (10) for manufacturing containers made of thermoplastic material, comprising:
- a heating tunnel (18) defining a heating path;
- a conveyor (20) comprising at least one running rail (22) forming a circuit and shuttles (24) that are able to circulate along the rail (22) while carrying at least one hollow body (12), the movement of each shuttle (24) being controlled individually, the rail (22) having a heating portion (22B) for transporting the hollow bodies (12) along the heating path;
- a device (32) for inputting the hollow bodies (12) to be heated, which brings the hollow bodies (12) as far as a loading portion (22A) of the running rail (22) for loading them onto the shuttles (24), two successive shuttles (24) circulating on this loading portion (22A) with a determined first input spacing (E1);
- a device (38) for outputting the hot hollow bodies (12), which recovers the hollow bodies (12) carried on the shuttles (24) circulating on an unloading portion (22C) of the running rail (22),
**characterized in that** each shuttle (24) comprises a first member (26A) for supporting a first hollow body (12) and a second member (26B) for supporting a second hollow body (12), each shuttle (24) thus being able to simultaneously carry two hollow bodies (12), the support members (26A, 26B) of a shuttle (24) being mounted on said shuttle (24) so as to be able to move between an extended position, in which the support members (26A, 26B) are spaced apart by said first input spacing (E1) in the direction of movement of the shuttle (24), and a close position, in which the support members (26A, 26B) are close to one another in the direction of movement of this shuttle (24), in such a manner that two successive shuttles (24) circulating on the unloading portion (22C) are spaced apart by a determined output spacing (E3) that is different to the first input spacing (E1).

2. Conveyor (20) according to Claim 1, **characterized in that** each shuttle (24) comprises an arm (50) defining an orientation axis, each end of said arm (50) comprising one of the support members (26A, 26B) of its respective shuttle, said arm (50) being mounted so as to be able to rotate with respect to the shuttle (24) about a main axis between a straight position corresponding to the direction of movement of the shuttle (24) and an oblique position that is inclined with respect to the straight position.

3. Conveyor (20) according to either one of Claims 1 and 2, **characterized in that** the hollow bodies (12) of a first row are carried by the transport members (26A) arranged at the front of the shuttles (24), while the hollow bodies (12) of a second row are carried by the transport members (26B) arranged at the rear of the shuttles (24).

4. Conveyor (20) according to either one of Claims 2 and 3, **characterized in that**, in the oblique position, the arm (50) forms an angle of 45° with the direction of movement of the shuttles (24) so that the hollow bodies (12) of the first row are longitudinally offset between two hollow bodies (12) of the second row.

5. Conveyor (20) according to either one of Claims 3 and 4, **characterized in that** it comprises an actuator, which is able to control the arm (50) between its straight position and its oblique position.

6. Conveyor (20) according to Claim 5, **characterized in that** the actuator is able to be actuated by an actuating member carried by one of the adjacent shuttles (24).

7. Conveyor (20) according to Claim 6, **characterized in that** said actuating member consists of a pusher able to come into contact with a pivoting mechanism of an adjacent shuttle (24) in order to control the pivoting of the arm (50).

8. Conveyor (20) according to Claim 7, **characterized in that** said pivoting mechanism is a cam device.

9. Conveyor (20) according to Claim 7, **characterized in that** said pivoting mechanism is a meshing device.
